# FASCICULE DE BREVET EUROPEEN

(11) **EP 3 869 023 B1**
(45) Date de publication et mention de la délivrance du brevet: **03.04.2024**
(21) Numéro de dépôt: 21157518.8
(22) Date de dépôt: 17.02.2021
(51) Int. Cl.: F02K 1/04, F02K 1/82

(54) **STRUCTURE INTERNE D'UN CONDUIT D'ÉJECTION PRIMAIRE COMPORTANT UN SÉPARATEUR DONT LA GÉOMETRIE VARIE EN FONCTION DE LA TEMPÉRATURE**
INTERNE STRUKTUR EINES PRIMÄREN EJEKTIONSKANALS, EINSCHLIESSLICH EINES SEPARATORS, DESSEN GEOMETRIE VON DER TEMPERATUR ABHÄNGIG IST
INTERNAL STRUCTURE OF A PRIMARY EJECTION DUCT INCLUDING A SEPARATOR WHOSE GEOMETRY VARIES ACCORDING TO THE TEMPERATURE

(30) Priorité: 24.02.2020 FR 2001801
(43) Date de publication de la demande: 25.08.2021
(73) Titulaire: AIRBUS OPERATIONS, 31060 Toulouse Cedex 9 (FR)
(72) Inventeur: ANDRE, Sandrine, 31060 TOULOUSE (FR); TROCELLIER, Vincent, 31060 TOULOUSE (FR); FERREIRA, Julien, 31060 TOULOUSE (FR); KILKENNY, Michael, 31060 TOULOUSE (FR)
(74) Mandataire: Cabinet Le Guen Maillet

(56) Documents cités:
- US-A1- 2007 256 889
- US-A1- 2015 034 412
- US-A1- 2018 274 389

## Description

### DOMAINE TECHNIQUE

La présente invention concerne une structure interne d'un conduit d'éjection primaire d'une turbomachine qui comporte au moins un séparateur dont la géométrie varie en fonction de la température, une turbomachine comportant une telle structure interne, ainsi qu'un aéronef comportant au moins une telle turbomachine.

### ÉTAT DE LA TECHNIQUE ANTÉRIEURE

Une turbomachine comporte classiquement, de l'amont vers l'aval, une entrée d'air par laquelle l'air entre dans la turbomachine, un moteur qui assure la combustion de l'air et du carburant, et un conduit d'éjection par lequel sont évacués les gaz brûlés.

Une telle turbomachine génère des bruits lors de son fonctionnement.

Pour atténuer une partie des bruits, la turbomachine est entourée d'une nacelle comportant des moyens atténuateurs de bruit, comme par exemple des structures en nid d'abeilles.

Les sons de basses fréquences (entre 300 Hz et 1000 Hz), notamment ceux liés à la combustion, émis par la turbomachine durant le décollage ou l'atterrissage forment une importante source de bruit pour l'environnement et pour atténuer ces bruits, il est connu de disposer des dispositifs atténuateurs de sons basses fréquences dans la structure du conduit d'éjection primaire (appelée « plug » en Anglais).

Le conduit d'éjection primaire est situé dans le prolongement du moteur et avant le cône de tuyère et sa paroi primaire extérieure est en contact avec le flux de gaz brûlé en provenance du moteur.

Un tel dispositif est efficace, cependant il est nécessaire de trouver de nouveaux modes de réalisation.

Le document US-A-2007/256889 divulgue une structure interne d'un conduit d'éjection primaire d'une turbomachine qui comporte des séparateurs, mais chacun de ces séparateurs est fixé par au moins trois de ses bords à une structure rigide, et un changement de géométrie de ces séparateurs sous l'effet d'une variation de température est donc totalement exclu sous peine de déformer la structure interne.

Le document US-A-2018-274389 divulgue un procédé d'assemblage par déformation sous l'effet d'une variation de température.

### EXPOSÉ DE L'INVENTION

Un objet de la présente invention est de proposer une structure interne d'un conduit d'éjection primaire d'une turbomachine qui comporte des dispositifs d'atténuation des bruits de basses fréquences qui soit simple et facile à mettre en oeuvre et qui utilise au moins un séparateur dont la géométrie varie en fonction de la température.

A cet effet, est proposée une structure interne d'un conduit d'éjection primaire d'une turbomachine, ladite structure interne comportant :
- une paroi primaire consistant en une surface de révolution autour d'un axe longitudinal X, laissant passer l'air à travers des orifices et formant une surface interne du conduit d'éjection primaire,
- une peau intérieure consistant en une surface de révolution autour de l'axe longitudinal X, agencée à l'intérieur de la paroi primaire, et
- au moins un séparateur qui est fixé uniquement à la peau intérieure par une zone le long d'un premier bord par au moins deux fixations et qui présente une première géométrie et une deuxième géométrie, où le passage de la première géométrie à la deuxième géométrie s'effectue lorsque la température du séparateur dépasse une première température, et le passage de la deuxième géométrie à la première géométrie s'effectue lorsque la température du séparateur passe sous une deuxième température inférieure ou égale à la première température, et où le coefficient de dilatation du séparateur est supérieur à celui de la peau intérieure, où dans la première géométrie, le séparateur est enroulé sur lui-même, et dans la deuxième géométrie, le séparateur est déployé et s'étend de manière à rapprocher le deuxième bord au plus près de la paroi primaire.

La variation de la géométrie des séparateurs en fonction de la température du moteur facilite l'assemblage à température ambiante du fait de l'écrasement des séparateurs.

Avantageusement, chaque fixation autorise une rotation du séparateur autour d'un axe perpendiculaire à la peau intérieure.

Avantageusement, la structure interne comporte deux fixations et entre les deux fixations, au moins un moyen de guidage du séparateur par rapport à la peau intérieure qui autorise le déplacement du premier bord sur la peau intérieure.

Avantageusement, chaque moyen de guidage prend la forme d'un boulon prenant en sandwich le séparateur et la peau intérieure à travers des orifices prévus à cet effet, et l'un parmi l'orifice traversant le séparateur ou l'orifice traversant la peau intérieure présente une forme oblongue autorisant le déplacement de la tige filetée du boulon.

L'invention propose également une turbomachine comportant un conduit d'éjection primaire délimité à l'extérieur par une tuyère primaire et à l'intérieur par une structure interne selon l'une des variantes précédentes.

L'invention propose également un aéronef comportant au moins une turbomachine selon la variante précédente.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'un conduit d'éjection primaire,
Fig. 3 est une vue en perspective d'une structure interne d'un conduit d'éjection primaire selon l'invention,
Fig. 4 est une vue en perspective d'un séparateur dans deux positions d'utilisation,
Fig. 5 montre une vue en perspective du séparateur dans une première géométrie, et
Fig. 6 montre une vue en perspective du séparateur dans une deuxième géométrie.

### EXPOSÉ DÉTAILLÉ DE MODES DE RÉALISATION

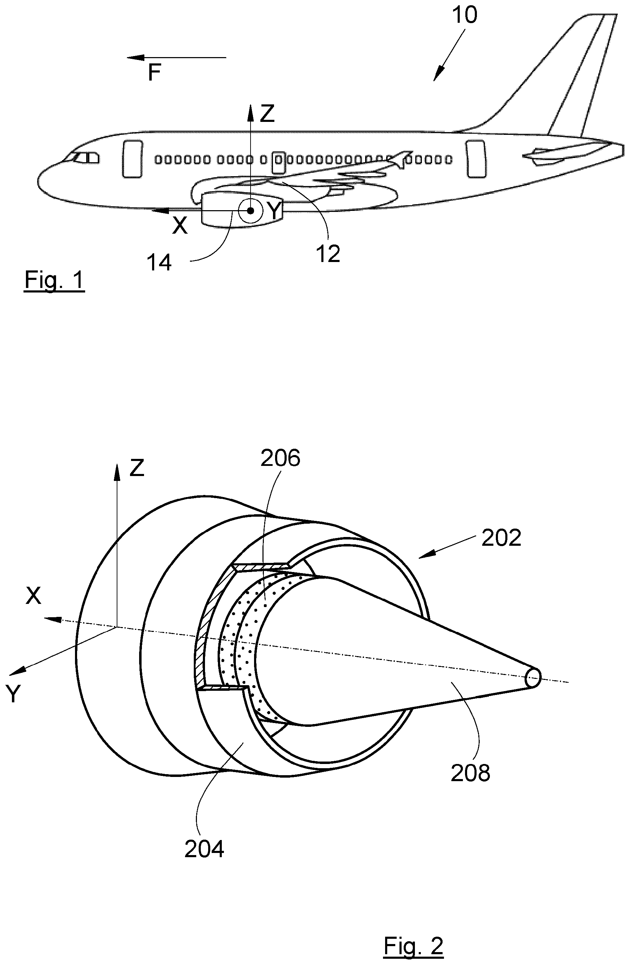

La Fig. 1 montre un aéronef 10 qui comporte une aile 12 sous laquelle est fixée une nacelle 14 dans laquelle est logée une turbomachine.

Dans la description qui suit, et par convention, on appelle X l'axe longitudinal de la turbomachine, orienté positivement dans le sens d'avancement de l'aéronef 10 et qui est également l'axe longitudinal de la nacelle 14, on appelle Y l'axe transversal qui est horizontal lorsque l'aéronef 10 est au sol, et Z l'axe vertical ou hauteur verticale lorsque l'aéronef 10 est au sol, ces trois directions X, Y et Z étant orthogonales entre elles.

Dans la description qui suit, les termes relatifs à une position sont pris en référence au sens de déplacement de l'aéronef 10 lorsque la turbomachine fonctionne et représenté par la flèche F.

La Fig. 2 montre la partie arrière de la turbomachine qui forme un conduit d'éjection primaire 202 par lequel s'échappent les gaz brûlés par la turbomachine et qui est délimité à l'extérieur par une tuyère primaire 204 et à l'intérieur par une structure interne 206 du conduit d'éjection primaire 202.

Le conduit d'éjection primaire 202 comme sa structure interne 206 ont une forme générale consistant en des surfaces de révolution autour de l'axe longitudinal X de la turbomachine.

A l'arrière de la structure interne 206 est fixé un cône de tuyère 208.

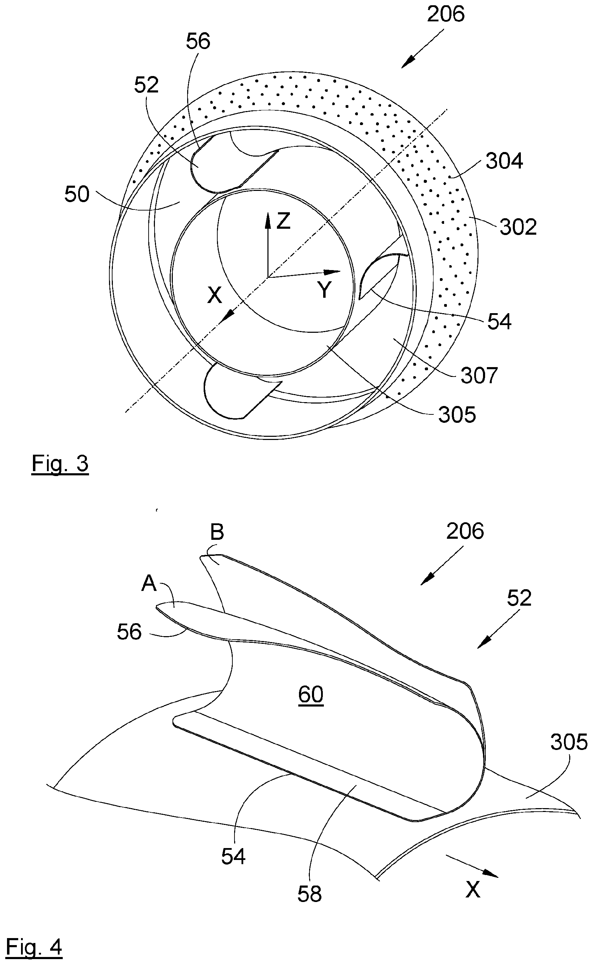

La Fig. 3 montre une vue de devant et en perspective de la structure interne 206, et la Fig. 4 est une vue d'une partie de la structure interne 206.

La structure interne 206 comporte une paroi primaire 302 percée de trous 304 répartis sur la surface de la paroi primaire 302. La paroi primaire 302 forme la surface extérieure de la structure interne 206, c'est-à-dire celle qui forme la surface interne du conduit d'éjection primaire 202.

La structure interne 206 comporte une peau intérieure 305. La paroi primaire 302 et la peau intérieure 305 consistent chacune en une surface de révolution autour de l'axe longitudinal X qui est, dans cet exemple, globalement cylindrique et la peau intérieure 305 est agencée à l'intérieur de la paroi primaire 302 de manière à constituer un ensemble de deux surfaces coaxiales.

La fixation de la peau intérieure 305 à la paroi primaire 302 est assurée par tous moyens appropriés et connus de l'homme du métier comme par exemple un flasque amont (non représenté) et un flasque aval 307 fixés entre la paroi primaire 302 et la peau intérieure 305. La fixation de chaque flasque 307 est réalisée par tous moyens appropriés comme par exemple par vis, soudure, etc.

Le volume 50 entre la peau intérieure 305 et la paroi primaire 302 forme un caisson constituant un résonateur de Helmholtz.

Afin de diviser le volume 50 en plusieurs sous-volumes, la structure interne 206 comporte au moins un séparateur 52 qui prend la forme d'une bande dont une zone le long d'un premier bord 54 est fixée à la peau intérieure 305. Le séparateur 52 n'est pas fixé à la paroi primaire 302 afin de ne pas contraindre l'assemblage en cas de déformation de la structure interne 206 et pour laisser libre les autres bords du séparateur 52. Le premier bord 54 est globalement parallèle à l'axe longitudinal X. En outre, comme le montre clairement la Fig. 4, le séparateur 52 est fixé uniquement à la peau intérieure 305 au niveau de son premier bord 54, et le deuxième bord 56 opposé au premier bord 54 n'est pas fixé à la paroi primaire 302, et ni le bord avant, ni le bord arrière qui relient le premier bord 54 et le deuxième bord 56 ne sont fixés à une structure de la structure interne 206.

La fixation de la zone de chaque séparateur 52 à la peau intérieure 305 s'effectue par tous moyens appropriés comme des boulons.

Le séparateur 52 est réalisé dans un matériau qui permet une modification de la géométrie du séparateur 52 en fonction de la température dudit séparateur 52.

Le séparateur 52 présente une première géométrie A et une deuxième géométrie B. Le passage de la première géométrie A à la deuxième géométrie B s'effectue lorsque la température du séparateur 52 dépasse une première température supérieure à la température ambiante et préférentiellement de l'ordre de 300°C, et à l'inverse le passage de la deuxième géométrie B à la première géométrie A s'effectue lorsque la température du séparateur 52 passe sous une deuxième température inférieure ou égale à la première température.

Dans la première géométrie A, la géométrie est dite rétractée, et le séparateur 52 est ramassé sur lui-même et il est ici plus précisément enroulé sur lui-même. Ainsi le deuxième bord 56 opposé au premier bord 54 est rapproché du premier bord 54 pour réduire l'envergure du séparateur 52 radialement par rapport à l'axe longitudinal X.

Dans la deuxième géométrie B, la géométrie est dite déployée, et le séparateur 52 est déployé et s'étend de manière à rapprocher le deuxième bord 56 au plus près possible de la paroi primaire 302. Ainsi, le deuxième bord 56 s'éloigne du premier bord 54 pour augmenter l'envergure du séparateur 52 radialement par rapport à l'axe longitudinal X afin de diviser le volume 50.

Comme cela est expliqué ci-dessous, une telle architecture permet d'assembler la structure interne 206 à température ambiante avec les séparateurs 52 en position rétractée ce qui facilite leur mise en place.

Selon un mode de réalisation particulier, afin d'éviter le contact entre le séparateur 52 et la paroi primaire 302, la longueur du séparateur 52 est réduite par rapport à la distance entre la paroi primaire 302 et la peau intérieure 305. L'écart entre le deuxième bord 56 et la paroi primaire 302 est par exemple de l'ordre de 2 mm.

Comme le montre la Fig. 4, le séparateur 52 est fixé à la peau intérieure 305 par une base 58 qui s'étend le long du premier bord 54 et constitue la zone fixée à la peau intérieure 305 et le séparateur 52 s'étend au-delà de la base 58 par une bande 60. La bande 60 s'étend entre la base 58 et le deuxième bord 56.

Dans le mode de réalisation de l'invention présenté ici, et dans un plan radial, la bande 60 prend une forme globalement parallélépipédique lorsqu'elle est étalée.

Les caractéristiques du séparateur 52 comme par exemple les matériaux, les dimensions de la bande 60 et de la base 58 (épaisseur, largueur, longueur) sont choisies de sorte que le séparateur 52 change sa forme en fonction de la température comme décrit ci-dessus.

Le séparateur 52 est réalisé dans un matériau avec un coefficient de dilatation supérieur à celui de la peau intérieure 305.

Ainsi, dans la première position, à température ambiante, la base 58 est légèrement courbe pour suivre la peau intérieure 305.

Lorsque la température augmente, la peau intérieure 305 se dilate axialement et comme la base 58 se dilate plus, sa courbure va augmenter pour suivre la dilatation de la peau intérieure 305 et la courbure augmentant, la bande 60 va naturellement se déployer.

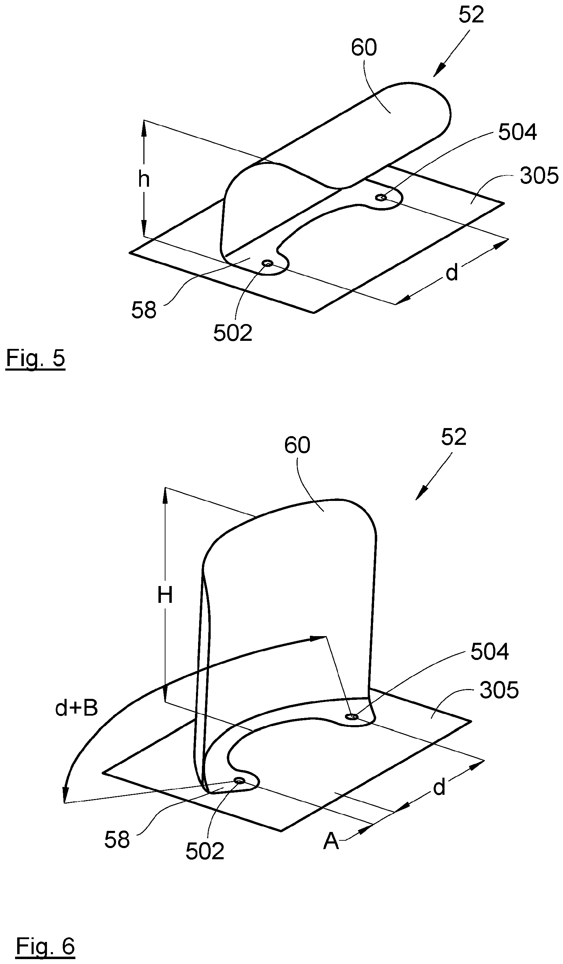

La Fig. 5 montre le séparateur 52 dans la première géométrie et fixé sur la peau intérieure 305, c'est-à-dire en condition de température ambiante. Le séparateur 52 est fixé à la peau intérieure 305 par deux fixations 502 et 504 autorisant une rotation du séparateur 52 ici de la base 58 autour d'un axe perpendiculaire à la peau intérieure 305 comme par exemple deux boulons avec un jeu et/ou des rondelles. La distance entre les deux fixations 502 et 504 en condition de température ambiante est « d ».

Comme expliqué ci-dessus, dans la première géométrie, le séparateur 52 présente une forme courbe dans sa partie supérieure, c'est-à-dire la bande 60 qui est la partie qui n'est pas fixée à la peau intérieure 305 et cette forme permet de réduire son encombrement « h » perpendiculairement à la peau intérieure 305, afin de faciliter son installation pour une application sur une structure interne 206 d'un conduit d'éjection primaire 202.

Comme déjà précisé ci-dessus, le coefficient de dilation thermique du séparateur 52 est supérieur au coefficient de dilation thermique de la peau intérieure 305, et la peau intérieure 305 est par exemple plus rigide que le séparateur 52 par exemple du fait d'une plus grande épaisseur.

La Fig. 6 montre le séparateur 52 dans la deuxième géométrie, c'est-à-dire en condition de température sortie moteur à haute température.

Du fait de l'accroissement de température, la peau intérieure 305 s'est dilatée d'une distance A, en particulier parallèlement à la ligne passant par les deux fixations 502 et 504, et les deux fixations 502 et 504 sont maintenant distantes d'une distance D supérieure à la distance d.

Du fait des différences entre les coefficients de dilatation thermique, le séparateur 52 s'est dilaté d'une distance B qui est supérieure à la distance A.

Étant contraint par les deux fixations 502 et 504, le séparateur 52 se courbe autour d'un axe normal à la peau intérieure 305 pour assurer son expansion thermique. Le premier bord 54 se déplace ainsi sur la peau intérieure 305 pour se courber.

Cette courbure normale à la peau intérieure 305 a pour effet de réduire, voire supprimer, la courbure initiale de la partie supérieure à température ambiante, ce qui permet le déploiement du séparateur sur toute sa hauteur « H » et ainsi assurer pleinement sa fonction.

Un abaissement de température permet de revenir à la position initiale de la Fig. 5.

Ainsi, comme déjà expliqué ci-dessus, la dilation différentielle entre le séparateur 52 et la peau intérieure 305 déclenche le changement de forme du séparateur 52 en fonction de la température et facilite son montage.

La bande 60 se courbe de façon continue selon une direction qui la rapproche de la peau intérieure 305 lorsque sa température diminue et se redresse de façon continue dans une direction opposée quand sa température augmente.

De préférence, le séparateur 52 a des caractéristiques qui sont choisies de manière à ce qu'il commence à se déployer linéairement pour une valeur de température (première température) de l'ordre de 300°C et est complètement déployé pour une température supérieure à 400°C.

Le séparateur 52 comprend par exemple des feuilles réalisées dans des matériaux à mémoire de forme choisis parmi l'une des combinaisons suivantes : Titane et alliage Cr-Ni-Fe (Chrome, Nickel-Fer), ou Nickel et Fer, ou Cuivre et alliage d'Aluminium ou Cuivre et Zinc.

Un exemple d'un procédé d'assemblage de la structure interne 206 consiste en :
- une première étape de fourniture au cours de laquelle la paroi primaire 302 est fournie,
- une deuxième étape de fourniture au cours de laquelle la peau intérieure 305 est fournie,
- une troisième étape de fourniture au cours de laquelle au moins un séparateur 52 est fourni,
- pour chaque séparateur 52, une première étape de fixation au cours de laquelle chaque séparateur 52 est fixé à la peau intérieure 305,
- une étape d'introduction au cours de laquelle la peau intérieure 305 et les séparateurs 52 sont introduits dans la paroi primaire 302, et
- une deuxième étape de fixation au cours de laquelle la peau intérieure 305 est fixée à la paroi primaire 302.

Dans la mesure où l'étape d'introduction s'effectue à température ambiante inférieure à la première température, les séparateurs 52 sont ramassés sur eux-mêmes et peuvent ainsi facilement pénétrer à l'intérieur de la paroi primaire 302.

Pour guider au mieux le séparateur 52 lorsqu'il se courbe autour de l'axe normal à la peau intérieure 305 lors de son expansion thermique, la structure interne 206 comporte au moins un moyen de guidage du séparateur 52 par rapport à la peau intérieure 305 qui autorise le déplacement du premier bord 54 sur la peau intérieure 305.

Selon un mode de réalisation particulier, les deux fixations 502 et 504 sont arrangées aux deux extrémités du premier bord 54, c'est-à-dire ici de la base 58, et le ou les moyens de guidage sont répartis entre les deux fixations 502 et 504.

Chaque moyen de guidage prend par exemple la forme d'un boulon prenant en sandwich le séparateur 52, ici le premier bord 54 et plus précisément la base 58, et la peau intérieure 305 à travers des orifices prévus à cet effet, et l'un parmi l'orifice traversant le séparateur 52 ou l'orifice traversant la peau intérieure 305 présente une forme oblongue autorisant le déplacement de la tige filetée du boulon lors du déplacement du premier bord 54. L'orientation de l'orifice oblong est globalement radiale par rapport à l'axe normal autour duquel se courbe le séparateur 52.

## Revendications

1. Structure interne (206) d'un conduit d'éjection primaire (202) d'une turbomachine, ladite structure interne (206) comportant :
- une paroi primaire (302) consistant en une surface de révolution autour d'un axe longitudinal X, laissant passer l'air à travers des orifices (304) et formant une surface interne du conduit d'éjection primaire (202),
- une peau intérieure (305) consistant en une surface de révolution autour de l'axe longitudinal X, agencée à l'intérieur de la paroi primaire (302), et
- au moins un séparateur (52) qui est fixé uniquement à la peau intérieure (305) par une zone le long d'un premier bord (54) par au moins deux fixations (502, 504) et qui présente une première géométrie (A) et une deuxième géométrie (B), où le passage de la première géométrie (A) à la deuxième géométrie (B) s'effectue lorsque la température du séparateur (52) dépasse une première température, et le passage de la deuxième géométrie (B) à la première géométrie (A) s'effectue lorsque la température du séparateur (52) passe sous une deuxième température inférieure ou égale à la première température, et où le coefficient de dilatation du séparateur (52) est supérieur à celui de la peau intérieure (305), où dans la première géométrie (A), le séparateur (52) est enroulé sur lui-même, et où dans la deuxième géométrie (B), le séparateur (52) est déployé et s'étend de manière à rapprocher le deuxième bord (56) au plus près de la paroi primaire (302).

2. Structure interne (206) selon la revendication 1, **caractérisée en ce que** chaque fixation (502, 504) autorise une rotation du séparateur (52) autour d'un axe perpendiculaire à la peau intérieure (305).

3. Structure interne (206) selon la revendication 2, **caractérisée en ce qu'**elle comporte deux fixations (502, 504) et entre les deux fixations (502, 504), au moins un moyen de guidage du séparateur (52) par rapport à la peau intérieure (305) qui autorise le déplacement du premier bord (54) sur la peau intérieure (305).

4. Structure interne (206) selon la revendication 3, **caractérisée en ce que** chaque moyen de guidage prend la forme d'un boulon prenant en sandwich le séparateur (52) et la peau intérieure (305) à travers des orifices prévus à cet effet, et **en ce que** l'un parmi l'orifice traversant le séparateur (52) ou l'orifice traversant la peau intérieure (305) présente une forme oblongue autorisant le déplacement de la tige filetée du boulon.

5. Turbomachine comportant un conduit d'éjection primaire (202) délimité à l'extérieur par une tuyère primaire (204) et à l'intérieur par une structure interne (206) selon l'une des revendications 1 à 4.

6. Aéronef (10) comportant au moins une turbomachine selon la revendication précédente.

## Patentansprüche

1. Innenstruktur (206) eines primären Ausstoßrohres (202) eines Turbotriebwerks, wobei die Innenstruktur (206) aufweist:
- eine primäre Wand (302), die aus einer um eine Längsachse X ausgebildeten Rotationsfläche besteht, welche die Luft durch Öffnungen (304) hindurchströmen lässt und eine Innenfläche des primären Ausstoßrohres (202) bildet,
- eine Innenhaut (305), die aus einer um die Längsachse X ausgebildeten Rotationsfläche besteht und im Inneren der primären Wand (302) angeordnet ist, und
- mindestens einen Separator (52), der mit einem Bereich entlang eines ersten Randes (54) mittels mindestens zweier Befestigungselemente (502, 504) ausschließlich an der Innenhaut (305) befestigt ist und der eine erste Geometrie (A) und eine zweite Geometrie (B) aufweist, wobei der Übergang von der ersten Geometrie (A) zur zweiten Geometrie (B) erfolgt, wenn die Temperatur des Separators (52) eine erste Temperatur überschreitet, und der Übergang von der zweiten Geometrie (B) zur ersten Geometrie (A) erfolgt, wenn die Temperatur des Separators (52) eine zweite Temperatur, die kleiner oder gleich der ersten Temperatur ist, unterschreitet, und wobei der Ausdehnungskoeffizient des Separators (52) größer als derjenige der Innenhaut (305) ist, wobei bei der ersten Geometrie (A) der Separator (52) zusammengerollt ist und wobei bei der zweiten Geometrie (B) der Separator (52) gestreckt ist und sich so erstreckt, dass der zweite Rand (56) der primären Wand (302) so nahe wie möglich kommt.

2. Innenstruktur (206) nach Anspruch 1, **dadurch gekennzeichnet, dass** jedes Befestigungselement (502, 504) eine Drehung des Separators (52) um eine zur Innenhaut (305) senkrechte Achse ermöglicht.

3. Innenstruktur (206) nach Anspruch 2, **dadurch gekennzeichnet, dass** sie zwei Befestigungselemente (502, 504) und zwischen den zwei Befestigungselementen (502, 504) mindestens ein Mittel zur Führung des Separators (52) in Bezug auf die Innenhaut (305), das die Verschiebung des ersten Randes (54) auf der Innenhaut (305) ermöglicht, aufweist.

4. Innenstruktur (206) nach Anspruch 3, **dadurch gekennzeichnet, dass** jedes Mittel zur Führung die Form eines Bolzens aufweist, der den Separator (52) und die Innenhaut (305) durch zu diesem Zweck vorgesehene Öffnungen hindurch sandwichartig einschließt, und dadurch, dass eine von der den Separator (52) durchquerenden Öffnung und der die Innenhaut (305) durchquerenden Öffnung eine längliche Form aufweist, welche die Verlagerung des Gewindeschaftes des Bolzens ermöglicht.

5. Turbotriebwerk, welches ein primäres Ausstoßrohr (202) aufweist, das außen von einer Primärdüse (204) und innen von einer Innenstruktur (206) nach einem der Ansprüche 1 bis 4 begrenzt wird.

6. Luftfahrzeug (10), welches mindestens ein Turbotriebwerk nach dem vorhergehenden Anspruch aufweist.

## Claims

1. Internal structure (206) of a primary exhaust duct (202) of a turbomachine, said internal structure (206) having:
- a primary wall (302) consisting of a surface of revolution about a longitudinal axis X, allowing the air to pass through orifices (304) and forming an internal surface of the primary exhaust duct (202),
- an interior skin (305) consisting of a surface of revolution about the longitudinal axis X, arranged inside the primary wall (302), and
- at least one separator (52) which is attached only to the interior skin (305) by a region along a first edge (54) by at least two attachments (502, 504) and which has a first geometry (A) and a second geometry (B), wherein the change from the first geometry (A) to the second geometry (B) takes place when the temperature of the separator (52) exceeds a first temperature, and the change from the second geometry (B) to the first geometry (A) takes place when the temperature of the separator (52) drops below a second temperature less than or equal to the first temperature, and wherein the coefficient of expansion of the separator (52) is greater than that of the interior skin (305), wherein, in the first geometry (A), the separator (52) is wound on itself, and wherein, in the second geometry (B), the separator (52) is opened out and extends so as to bring the second edge (56) as close as possible to the primary wall (302).

2. Internal structure (206) according to Claim 1, **characterized in that** each attachment (502, 504) allows rotation of the separator (52) about an axis perpendicular to the interior skin (305).

3. Internal structure (206) according to Claim 2, **characterized in that** it has two attachments (502, 504) and, between the two attachments (502, 504), at least one means for guiding the separator (52) with respect to the interior skin (305), which allows the movement of the first edge (54) over the interior skin (305).

4. Internal structure (206) according to Claim 3, **characterized in that** each guide means is in the form of a bolt that sandwiches the separator (52) and the interior skin (305) through orifices provided for this purpose, and **in that** one of the orifice passing through the separator (52) or the orifice passing through the interior skin (305) has an oblong shape allowing the movement of the threaded shank of the bolt.

5. Turbomachine having a primary exhaust duct (202) bounded outwardly by a primary nozzle (204) and inwardly by an internal structure (206) according to one of the Claims 1 to 4.

6. Aircraft (10) having at least one turbomachine according to the preceding claim.
